# EUROPEAN PATENT APPLICATION

(11) **EP 3 318 968 A1**
(43) Date of publication of application: **09.05.2018**
(21) Application number: 17200117.4
(22) Date of filing: 06.11.2017
(51) Int. Cl.: G06F 3/12

(54) **SYSTEM FOR PERSONALIZED WALLPAPER**

(30) Priority: 04.11.2016 US 201662418148 P; 17.10.2017 US 201762573284 P
(71) Applicant: Vegh Hughes, Kathy, Mayfield Heights, OH 44124 (US)
(72) Inventor: Vegh Hughes, Kathy, Mayfield Heights, OH 44124 (US)
(74) Representative: Viering, Jentschura & Partner mbB Patent- und Rechtsanwälte

(57) **Abstract**

Disclosed herein is a computerized system that provides a simple self-guided process that allows a user to design a customized wall paper without having to hire a professional graphic or interior designer. The system allows the user to input various parameters of the surface the wallpaper is to be mounted on, such as wall measurements, location of doors, windows, electrical outlets, shelving and other fixtures that may be mounted on the wall, and parameters for the wallpaper itself, such as type of pattern (e.g., mosaic, mural, collage) and/or type of wallpaper (e.g., traditional or repositionable) . The user uploads images to be employed for the wallpaper. Using the aforementioned parameters, the user can preview the wallpaper and preview the wallpaper overlaid on the wall using the parameters provided. Upon approval, the design is sent to a wallpaper printer for printing.

## Description

### CROSS REFERENCE TO RELATED APPLICATIONS

This application claims the benefit under 35 U.S.C. § 119 of U.S. Provisional Application No. 62/418,148, filed on November 4, 2016 and U.S. Provisional Application No. 62/573,284 filed on October 17, 2017. The contents of the aforementioned applications are herby incorporated by reference in their entirety.

### TECHNICAL FIELD

The present disclosure relates generally to customizable interior designing.

### BRIEF DESCRIPTION OF THE DRAWINGS

The accompanying drawings incorporated herein and forming a part of the specification illustrate the example embodiments.
FIG. 1 illustrates an example of a custom mural wallpaper design.
FIG. 2 illustrates an example of a custom mosaic wallpaper design.
FIG. 3 illustrates an example of a custom classic collage wallpaper design.
FIG. 4 illustrates an example of a custom contemporary collage wallpaper design.
FIG. 5 illustrates an example of a custom grid wallpaper design.
FIG. 6 illustrates an example of a system for creating a personalized, custom wallpaper.
FIG. 7 illustrates an example of a computer system upon which an example embodiment may be implemented.
FIG.8 illustrates an example of a computerized method of creating a personalized, custom wallpaper.
FIG. 9 illustrates an example of a computerized method of creating a personalized, custom mosaic wallpaper.
FIG. 10 illustrates an example of a computerized method of creating a personalized, custom mural wallpaper.
FIG. 11 illustrates an example of a computerized method of creating a personalized, custom classic collage wallpaper.
FIG. 12 illustrates an example of a computerized method of creating a personalized, custom contemporary collage wallpaper design.
FIG. 13 illustrates an example of a computerized method of creating a personalized, custom grid wallpaper design.

### DESCRIPTION OF EXAMPLE EMBODIMENTS

This description provides examples not intended to limit the scope of the appended claims. The figures generally indicate the features of the examples, where it is understood and appreciated that like reference numerals are used to refer to like elements. Reference in the specification to "one embodiment" or "an embodiment" or "an example embodiment" means that a particular feature, structure, or characteristic described is included in at least one embodiment described herein and does not imply that the feature, structure, or characteristic is present in all embodiments described herein.

Disclosed herein is a computerized system that provides a simple self-guided process that allows a user to design a customized wall paper without having to hire a professional graphic or interior designer. The system allows the user to input various parameters of the surface the wallpaper is to be mounted on, such as wall measurements, location of doors, windows, electrical outlets, shelving and other fixtures that may be mounted on the wall, and parameters for the wallpaper itself, such as type of pattern (e.g., mosaic, mural, collage, grid) and/or type of wallpaper

(e.g., traditional or repositionable). The user uploads images to be employed for the wallpaper. Using the aforementioned parameters, the user can preview the wallpaper and preview the wallpaper overlaid on the surface using the parameters provided. Upon approval, the design is sent to a wallpaper printer for printing.

Customization as used herein not only includes the ability to select predefined layouts, but allows a user to provide their own art. For example, the user may provide images such as photographs, text, and/or graphical art.

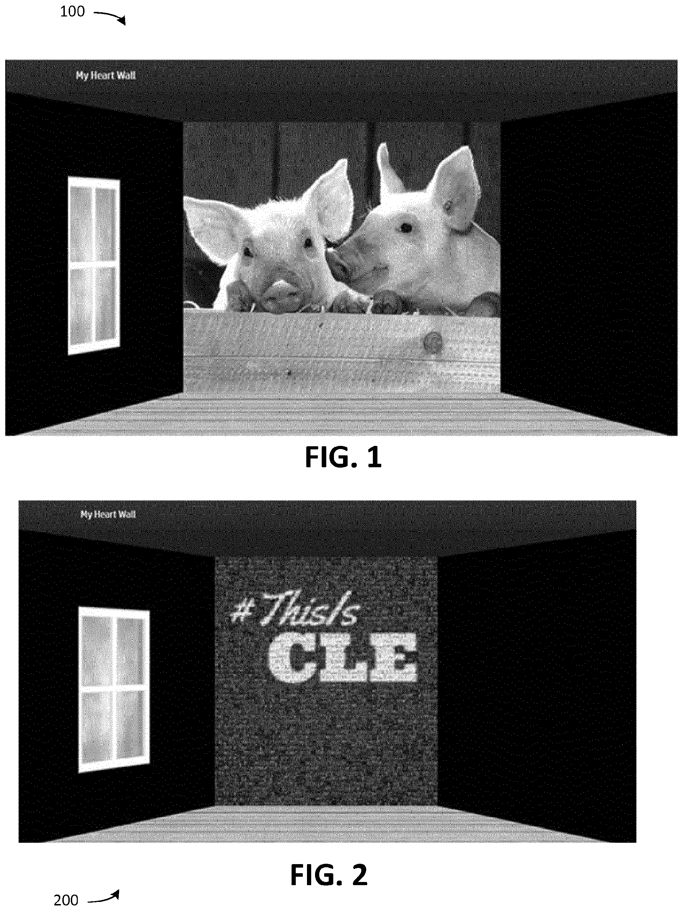

For example, in an example embodiment, the following steps may be employed to create a personalized, custom Mosaic wallpaper (*see e.g.,* FIG. 1 for an example of a Mosaic Wallpaper 100). Note that the order of the steps listed below was selected merely for ease of illustration as in some embodiments the steps may occur in a different order and/or concurrently.
Step 1: On the main Masterpiece Mosaic page and click on "Build My Mosaic!" (or similar prompt).
Step 2: Follow the prompts to upload a main photo (or other graphical image). The main image a large image that the rest of the little pictures will make up.
Step 3: Then follow the prompts to upload all of the other images that will make up your main image. The user will likely need to upload multiple times, depending on how many imagines the user would like to use.
Step 4: Once your uploads are complete click on the button that says "Make My Mosaic" (or similar icon to generate the mosaic).
Step 5: After the mosaic is generated the user will be able to scroll down on the right of the screen and click on "Let's put it up on my wall!"
Step 6: The user will see a and confirms the wall size, any and all doorways, windows etc. and even the paint colors of the other walls in your room. Press next.
Step 7: The user will then have the option to add fixtures and furniture using actual sizes if you'd like. Press next.
Step 8: The mosaic is located to the right of the wall, the user can double click on the mosaic and will see the wallpaper appear (overlaid) on the wall to give the look of what a wallpaper mosaic may look like.
Step 9: The user submits the job.
Step 10: The user names the project and clicks "Finish" to complete the purchase in the shopping cart. At this time, the user selects the wallpaper type and texture!

In an example embodiment, the following steps may be employed to create a personalized, custom Mural wallpaper (*see e.g.,* FIG. 2 for an example of a Mural Wallpaper 200). Note that the order of the steps listed below was selected merely for ease of illustration as in some embodiments the steps may occur in a different order and/or concurrently.
Step 1: The user is directed to the main Miracle Mural page.
Step 2: The use fills in their wall size (and includes and in particular embodiments includes other pertinent data such as doors, walls, windows, etc.) and selects the "Build My Mural!"
Step 3: The use will see a blank wall and confirms the wall size, any and all doorways, windows etc. and in particular embodiments the paint colors of the other walls in your room.
Step 4: The user will then have the option to add fixtures and furniture using actual sizes if desired.
Step 5: The user selects Upload to find the desired image (e.g., picture). The user selects "Choose File".
Step 6: The user can find the desired image image adjacent to the wall and double click on the image to obtain a preview
Step 7: The user submits the job.
Step 8: The user names the project and selects "Finish" and complete your purchase in the shopping cart. The user also selects the wallpaper type and texture!. texture!

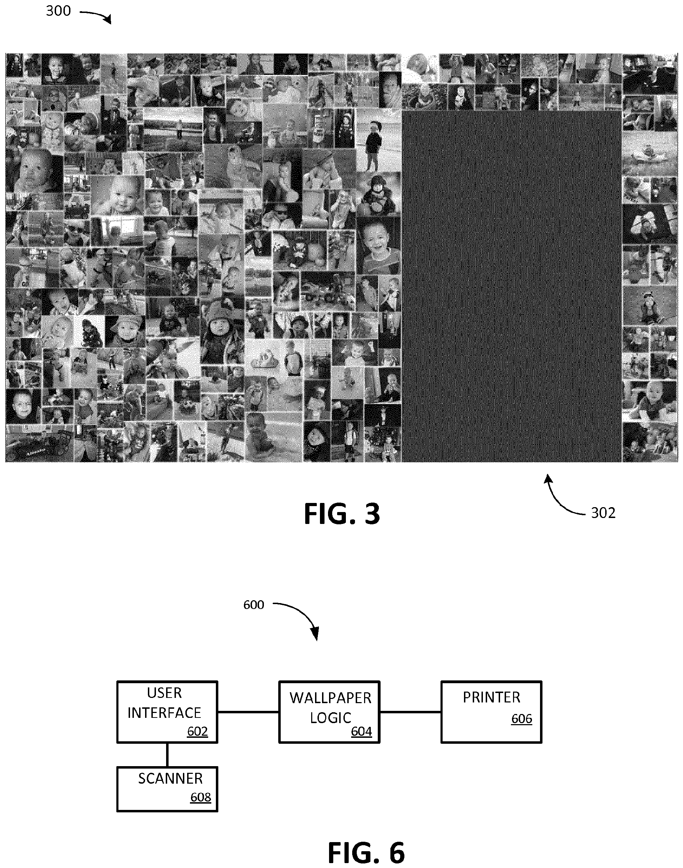

In an example embodiment, the following steps may be employed to create a personalized, custom classic collage wallpaper (*see e.g.,* FIG. 3 for an example of a custom classic collage wallpaper 300). Note that the order of the steps listed below was selected merely for ease of illustration as in some embodiments the steps may occur in a different order and/or concurrently. In an example embodiment, the user may select the images sizes from a plurality of preset image sizes. In another example embodiment, the system may automatically select image sizes from a plurality of preset sizes.
Step 1: Go to the main Classic Collage page and click on "Build My Collage"
Step 2: Then follow the prompts to upload the top priority pictures. These pictures represent the images that will be larger than the average image in the mosaic and will have eye level placement (*e.g*., between 5' - 5' 6" off the ground - which may vary based on the height of the purchaser).
Step 3: The user uploads all of the other images that will make up the rest of the custom classic collage. The user will likely need to upload multiple times, depending on how many imagines are being used.
Step 4: Once user uploads are complete, the user clicks on the button that says "Make My Collage".
Step 5: Once you select the "Make My Collage" button you will be prompted to register with a predefined website (*e.g*., www.myheartwall.com) The custom classic collage is generated. In an example embodiment, a designer may create the custom classic collage. In yet another example embodiment, the custom classic collage is automatically generated by a computer. In particular embodiments, the user is charged a fee for the review.
Step 6: In an example embodiment (e.g., where the custom classic collage is created by a designer), after the custom classic collage is completed, the user will receive an email notification (for example from hello@myheartwall.com) that will prompts the user to view and approve the custom classic collage.
Step 7: If the user approves the custom classic collage, the user will be asked to select a color scheme for printing the collage. Example of user options are full color, black and white and a sepia tone.
Step 8: After the classic custom collage color is confirmed, the will be able to scroll down on the right of the screen and click on "Let's put it up on my wall!"
Step 9: The user will see a blank wall, the user confirms the wall size, any and all doorways, windows etc., and in particular embodiments, the paint colors of the other walls in your room. For example, FIG. 3 illustrates a custom classic collage wallpaper 300 with a door cutout 302.
Step 10: The user has the option to add fixtures and furniture using actual sizes if you'd like.
Step 11: The custom classic collage is located adjacent to the wall. The user can double click on it and will see the collage appear on the wall to give a preview of what a wallpaper may look like.
Step 12: The user selects Click "Submit Job".
Step 13: The user names the project and clicks "Finish" and complete your purchase in the shopping cart. The user selects the wallpaper type and texture

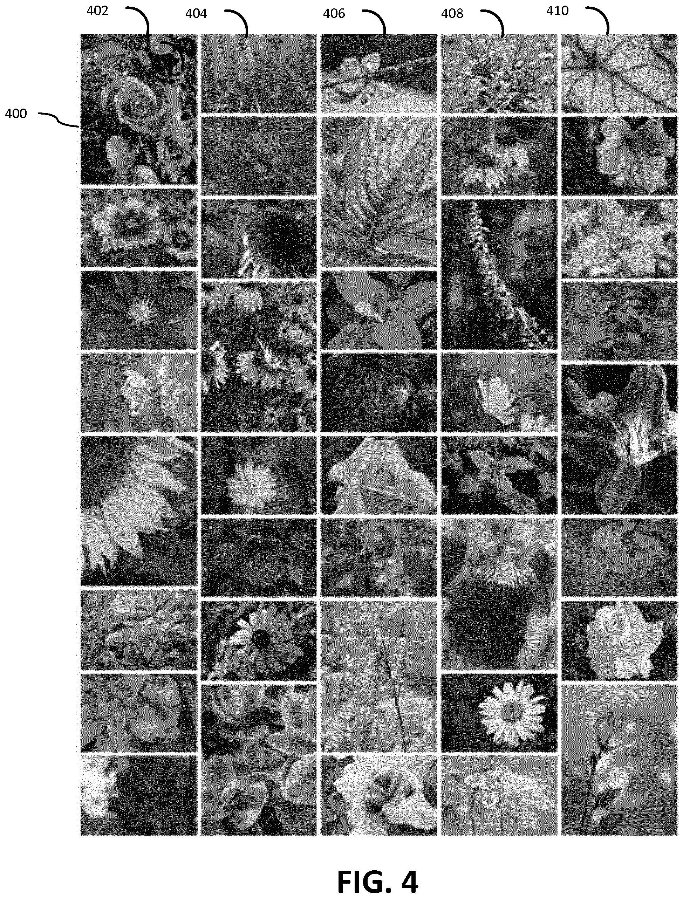

FIG. 4 illustrates an example 400 of a custom contemporary collage wallpaper design. The custom contemporary collage wallpaper comprises images that are displayed at predefined (e.g., two) different sizes (e.g., large and small), whereas the custom classic collage wallpaper illustrated in FIG. 3 .the images are unstructured and may overlap a bit into each other. The columns in the custom classic collage 300 may not be uniform as they are in the custom contemporary collage 300 (FIG. 3). In the example illustrated in FIG. 4, the custom contemporary collage wallpaper design comprises a plurality of columns, 402, 404, 406, 408, 410, but as those skilled in the art can readily appreciate, any physically realizable number of columns may be employed. In an example embodiment, the user selects individual columns and arranges them in order, however, in other embodiments, the columns may be grouped in panels of two or more columns. The columns comprise a large user image area and a small user image area. The location of the large user image area can vary from column to column. For example, in column 402, there are two large user image areas, one at the top of the column and one near the middle of the column, where column 404 there is one large user image area near the middle of the column and another large image user image area at the bottom of the column.

The user inputs the size of the area for the wallpaper to cover, uploads images (e.g., photos, other graphical art, and/or text) and selects a group of images (e.g., highlight) to prioritize for placement into the large areas. The prioritized images are distributed among the large user image areas and the remaining images are distributed in the small user image areas. In an alternative embodiment, the user can drag and drop the images into the desired location. In an example embodiment, the user is able to adjust the size of an image within its area to a desired size.

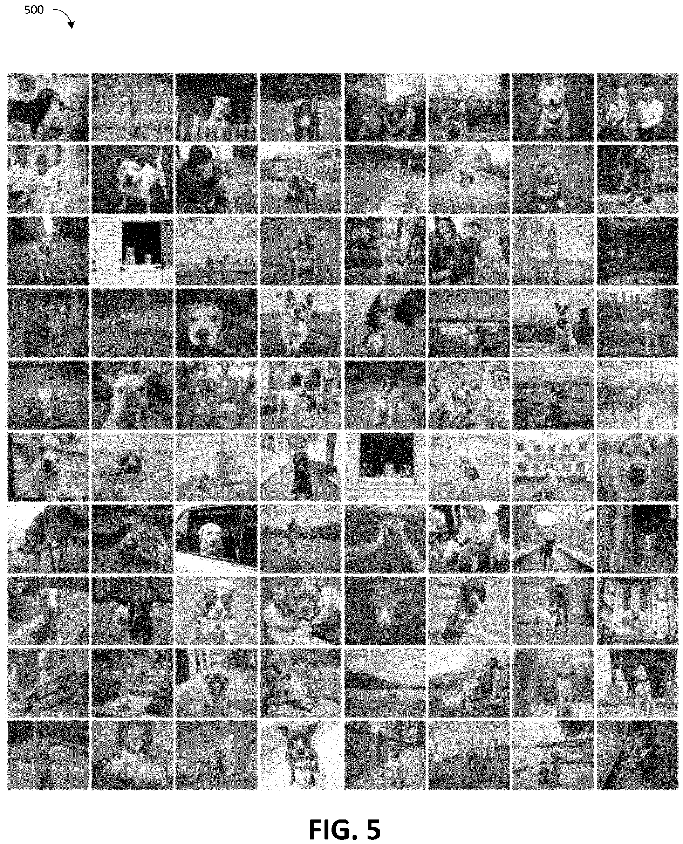

FIG. 5 illustrates an example 500 of a custom grid wallpaper design that may also referred to herein as the "Graceful Grid." In an example embodiment, the user uploads all of the images to be displayed. In another example embodiment, the grid design, some areas may be pre-populated and the user provides images for unfilled area. In the Graceful Grid design, the user or computer may adjust the size of the grid to fit the wall. The sizes of the individual cells within the grid are adjusted accordingly.

FIG. 6 illustrates an example of a system 600 for creating a personalized, custom wallpaper. The system 600 comprises a user interface 602 and wallpaper logic for implementing the functionality described herein. "Logic", as used herein, includes but is not limited to hardware, firmware, software and/or combinations of each to perform a function(s) or an action(s), and/or to cause a function or action from another component. For example, based on a desired application or need, logic may include a software controlled microprocessor, discrete logic such as an application specific integrated circuit (ASIC), a programmable/programmed logic device, memory device containing instructions, or the like, or combinational logic embodied in hardware. Logic may also be fully embodied as software that performs the desired functionality when executed by a processor. The user interface 602 and wallpaper logic 604 may be provided on a single computer system, or the wallpaper logic 604 may be located remote from the user interface For example the user interface 602 may be located on a remote client that is coupled via a network (or the Internet) to a (web) server that is hosting the wallpaper logic 604. The wallpaper logic 604 and printer 606 may be coupled to a single computer, or the wallpaper logic 604 may be located remotely from the user printer 606. For example the wallpaper logic 604 may be located on a remote client that is coupled via a network (or the Internet) to a (web) print server that is hosting the printer 606. In an example embodiment, a scanner 608 is coupled with the user interface 602. However, in other example embodiments, the scanner 608 may be embodied within the user interface 602. The scanner 608 allows a user to upload images that are forwarded to wallpaper logic 604.

In an example embodiment, a user employs the user interface 602 to select the wallpaper design (e.g., Mosaic, Mural, Custom Classic Collage, Custom Contemporary Collage, or Grid), upload images, provide parameters of the surface (e.g., wall) that are provided to the wallpaper logic 604. The wallpaper logic generates a preview that is provided to the user at the user interface 602 to review. Upon approval, the wallpaper logic 604 may collect a fee which the user can pay via user interface 602. The user can also specify wallpaper type and other pertinent parameters via the user interfaced 602. The wallpaper logic 604 then generates a print job for the printer 606 which then outputs the desired wallpaper design on the desired type of wallpaper.

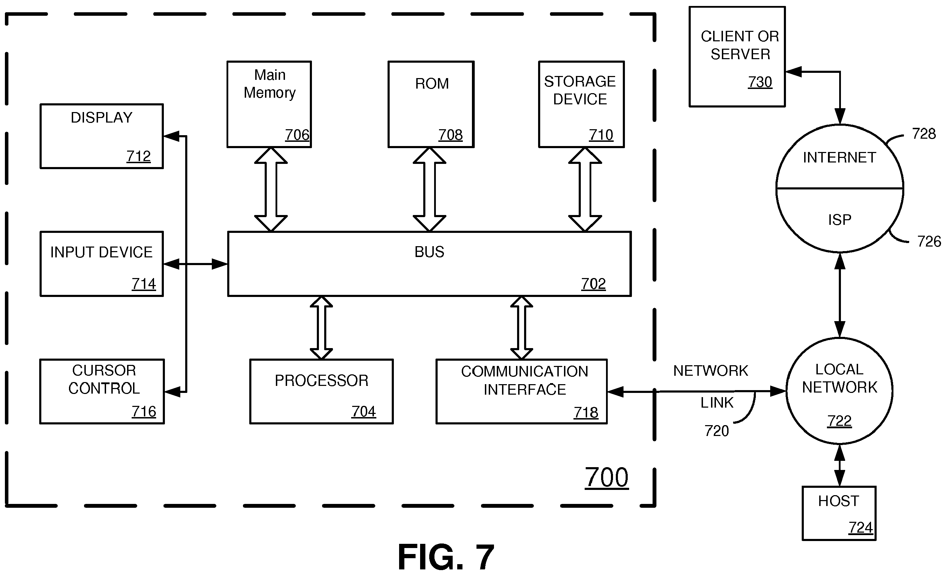

FIG. 7 illustrates an example of a computer system 700 upon which an example embodiment may be implemented. Computer system 700 may be employed to provide the functionality of the wallpaper logic 604 in FIG. 6 and/or to implement the methodologies described herein.

Computer system 700 includes a bus 702 or other communication mechanism for communicating information and a processor 704 coupled with bus 702 for processing information. Computer system 700 also includes a main memory 706, such as random access memory (RAM) or other dynamic storage device coupled to bus 702 for storing information and instructions to be executed by processor 704. Main memory 706 also may be used for storing a temporary variable or other intermediate information during execution of instructions to be executed by processor 704. Computer system 700 further includes a read only memory (ROM) 708 or other static storage device coupled to bus 702 for storing static information and instructions for processor 704. A storage device 710, such as a magnetic disk or optical disk, is provided and coupled to bus 702 for storing information and instructions.

Computer system 700 may be coupled via bus 702 to a display 712 such as a cathode ray tube (CRT) or liquid crystal display (LCD), for displaying information to a computer user. An input device 714, such as a keyboard including alphanumeric and other keys is coupled to bus 702 for communicating information and command selections to processor 704. Another type of user input device is cursor control 716, such as a mouse, a trackball, or cursor direction keys for communicating direction information and command selections to processor 704 and for controlling cursor movement on display 712. This input device typically has two degrees of freedom in two axes, a first axis (*e.g.* x) and a second axis (*e.g.* y) that allows the device to specify positions in a plane.

An aspect of the example embodiment is related to the use of computer system 700 for creating a personalized, custom wallpaper design. According to an example embodiment, creating a personalized, custom wallpaper design is provided by computer system 700 in response to processor 704 executing one or more sequences of one or more instructions contained in main memory 706. Such instructions may be read into main memory 706 from another computer-readable medium, such as storage device 710. Execution of the sequence of instructions contained in main memory 706 causes processor 704 to perform the process steps described herein. One or more processors in a multi-processing arrangement may also be employed to execute the sequences of instructions contained in main memory 706. In alternative embodiments, hard-wired circuitry may be used in place of or in combination with software instructions to implement an example embodiment. Thus, embodiments described herein are not limited to any specific combination of hardware circuitry and software.

The term "computer-readable medium" as used herein refers to any medium that participates in providing instructions to processor 704 for execution. Such a medium may take many forms, including non-volatile media. Non-volatile media include for example optical or magnetic disks, such as storage device 710. Volatile media include dynamic memory such as main memory 706. Common forms of computer-readable media include for example floppy disk, a flexible disk, hard disk, magnetic cards, paper tape, any other physical medium with patterns of holes, a RAM, a PROM, an EPROM, a FLASHPROM, CD, DVD or any other memory chip or cartridge, or any other medium from which a computer can read.

Computer system 700 also includes a communication interface 718 coupled to bus 702. Communication interface 718 provides a two-way data communication coupling computer system 700 to a network link 720 that is connected to a local network 722.

For example, communication interface 718 may be a local area network (LAN) card to provide a data communication connection to a compatible LAN. As another example, communication interface 718 may be an integrated services digital network (ISDN) card or a modem to provide a data communication connection to a corresponding type of telephone line. Wireless links may also be implemented. In any such implementation, communication interface 718 sends and receives electrical, electromagnetic, or optical signals that carry digital data streams representing various types of information.

Network link 720 typically provides data communication through one or more networks to other data devices. For example, network link 720 may provide a connection through local network 722 to a host computer 724 or to data equipment operated by an Internet Service Provider (ISP) 726. ISP 726 in turn provides data communications through the worldwide packet data communication network, now commonly referred to as the "Internet" 728.

Computer system 700 can send messages and receive data, including program codes, through the network(s), network link 720, and communication interface 718. In the Internet example, a client or server 730 might transmit a requested code for an application program through Internet 728, ISP 726, local network 722, and communication interface 718. In accordance with an example embodiment, one such downloaded application provides for creating a personalized, custom wallpaper design as described herein.

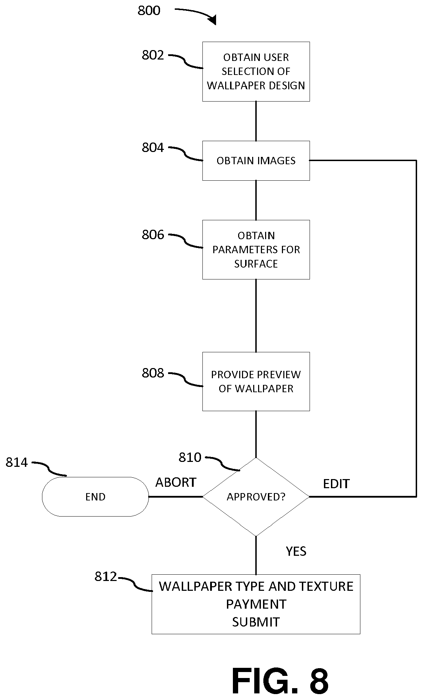

In view of the foregoing structural and functional features described above, a methodology in accordance with an example embodiment will be better appreciated with reference to Figures 8-13.. While, for purposes of simplicity of explanation, the methodologies of Figures 8-13 are shown and described as executing serially, it is to be understood and appreciated that the example embodiments are not limited by the illustrated orders, as some acts could occur in different orders and/or concurrently with other acts that are shown and described herein. Moreover, not all illustrated features may be required to implement a methodology in accordance with an of an example embodiment. The methodologies described herein are suitably adapted to be implemented in hardware, software when executed by a processor, or a combination thereof. For example, the methodologies described herein may be implemented by the wallpaper logic 604 described in FIG. 6 and/or the computer system 700 described in FIG. 7.

FIG. 8 illustrates an example of a methodology 800 for creating a personalized, custom wallpaper,. At 802, a the type of wall paper is obtained. A user may be presented with several choices, including but not limited to Mosaic, Mural, Custom Classic Collage, Custom Contemporary Collage, or Grid as described herein.

At 804, images for the wallpaper design are obtained. The images may be photographs or other graphical images.

At 806, the parameters for the surface (e.g., wall) are obtained. These may include, but are not limited to, dimension of the surface (or wall), the location and dimensions of other features of the surface, such as, for example, doors, windows, shelves, outlets, fixtures, or any other pertinent features.

At 808, a preview of the wallpaper is provided. Upon request, a preview of the wallpaper overlaid onto an image of the wall employing the provided parameters is provided.

At 810, the system determines whether the design was approved. If the design was approved (YES), at 812, the wallpaper type and texture are obtained. In an example embodiment, payment is obtained. The personalized, custom wallpaper design is then submitted for printing with the images and parameters provided.

If, at 810, the user desires to make changes to either the wallpaper or wall parameters (EDIT), the user is allowed to make changes. As illustrated, the user is returned to 804 (obtain/edit image), however, as those skilled in the art can readily appreciate, the use may be returned to 806 (obtain surface parameters). In particular embodiments, the user may be provided with an interface to select whether to edit images or surface parameters.

If, at 810, the user decides to end the process (ABORT) without submitting the design, the methodology 800 stops as indicated at 814.

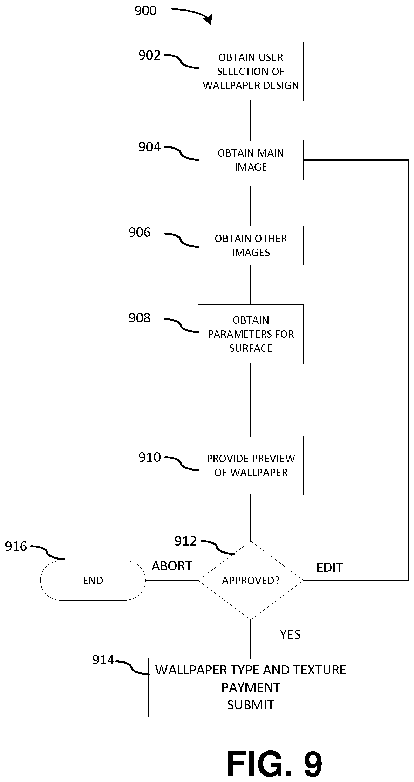

FIG. 9 illustrates an example of a computerized method 900 of creating a personalized, custom mosaic wallpaper. At 902, the user selection for the design (Mosaic) is received.

At 904, the main image for the mosaic design is obtained. The main image may be photographs or other graphical images.

At 906, the other (one or more) images for the mosaic design are obtained. The other images may be photographs, other graphical images, or a combination of photographs and other graphical images.

At 908, the parameters for the surface (*e.g*., wall) are obtained. These may include, but are not limited to, dimension of the surface (or wall), the location and dimensions of other features of the surface, such as, for example, doors, windows, shelves, outlets, fixtures, or any other pertinent features.

At 910, a preview of the wallpaper is provided. Upon request, a preview of the wallpaper overlaid onto an image of the wall employing the provided parameters is provided.

At 912, the system determines whether the design was approved. If the design was approved (YES), at 942, the wallpaper type and texture are obtained. In an example embodiment, payment is obtained. The personalized, custom wallpaper design is then submitted for printing with the images and parameters provided.

If, at 912, the user desires to make changes to either the wallpaper or wall parameters (EDIT), the user is allowed to make changes. As illustrated, the user is returned to 904 (the obtain images), however, as those skilled in the art can readily appreciate, the use may be returned to 906 (obtain surface parameters). In particular embodiments, the user may be provided with an interface to select whether to edit images or surface parameters.

If, at 912, the user decides to end the process (ABORT) without submitting the design, the methodology 600 stops as indicated at 964.

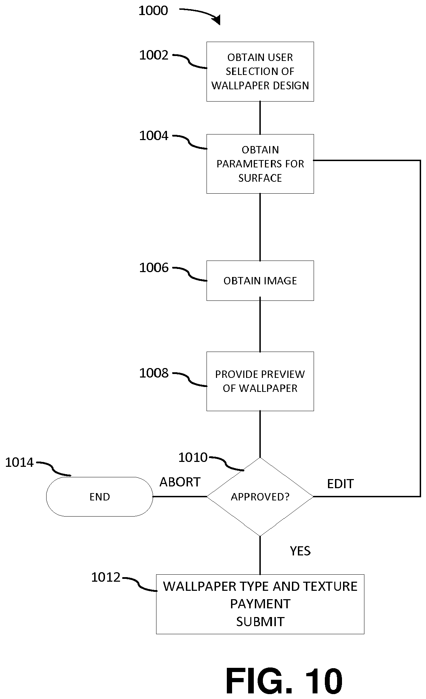

FIG. 10 illustrates an example of a computerized method 1000 of creating a personalized, custom mural wallpaper. At 1002, the user selection for the design (Mural) is received.

At 1004, the parameters for the surface (*e.g*., wall) are obtained. These may include, but are not limited to, dimension of the surface (or wall), the location and dimensions of other features of the surface, such as, for example, doors, windows, shelves, outlets, fixtures, or any other pertinent features.

At 1006, the image for the mural is obtained. The image may be photographs or other graphical images.

At 1008, a preview of the wallpaper is provided. Upon request, a preview of the wallpaper overlaid onto an image of the wall employing the provided parameters is provided.

At 1010, the system determines whether the design was approved. If the design was approved (YES), at 1012, the wallpaper type and texture are obtained. In an example embodiment, payment is obtained. The personalized, custom wallpaper design is then submitted for printing with the images and parameters provided.

If, at 1010, the user desires to make changes to either the wallpaper or wall parameters (EDIT), the user is allowed to make changes. As illustrated, the user is returned to the obtain surface parameters (1004) action, however, as those skilled in the art can readily appreciate, the use may be returned to the obtain the image at 1006 action. In particular embodiments, the user may be provided with an interface to select whether to edit images or surface parameters.

If, at 1010, the user decides to end the process (ABORT) without submitting the design, the methodology 600 stops as indicated at 1014.

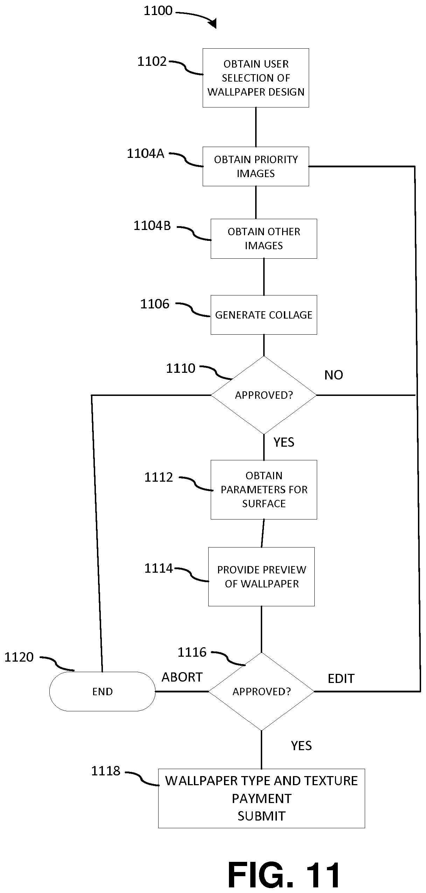

FIG. 11 illustrates an example of a computerized method 1100 of creating a personalized, custom classic collage wallpaper. At 1102, the user selection for the design (Custom Classic Collage) is received.

At 1104A, the primary images for the custom classic collage design is obtained. These are the images that will be larger than the average image size in the custom classic collage and may be located at eye level (*e.g*., between 5' - 5' 6" off the ground) placement.

At 1104B, the other (one or more) images for the custom classic collage design are obtained. The other images may be photographs, other graphical images, or a combination of photographs and other graphical images.

At 1106, the custom classic collage is generated. In an example embodiment, the images are sent to a predefined destination for manual generation of the custom classic collage. For example, the user may login to a particular website. In other embodiments, the custom classic collage may e computer generated. In particular embodiments, the user pays a fee for generation of the custom classic collage.

At 1110, the user reviews the custom classic collage. In the case of manual generation of the custom classic collage, the custom classic collage may be emailed to the user or the user may receive an email prompting the user to login to the website where the generated custom classic collage is stored.

If, at 1110, the user does not approve of the custom classic collage, the user may either edit the images (NO) or abort as indicated at 1120. If the user approves of the custom classic collage. If the user approves of the custom classic collage (YES), the user will be prompted for a color scheme for the custom classic collage (e.g.,. full color, black, white, or sepia).

At 1112, the parameters for the surface (*e.g*., wall) are obtained. These may include, but are not limited to, dimension of the surface (or wall), the location and dimensions of other features of the surface, such as, for example, doors, windows, shelves, outlets, fixtures, or any other pertinent features. In an example embodiment, In particular embodiments, the user may add furniture, colors of other walls in the room, or other pertinent information.

At 1114, a preview of the wallpaper is provided. Upon request, a preview of the wallpaper overlaid onto an image of the wall employing the provided parameters is provided.

At 1116, the system determines whether the design was approved. If the design was approved (YES), at 1118, the wallpaper type and texture are obtained. In an example embodiment, payment is obtained. The personalized, custom wallpaper design is then submitted for printing with the images and parameters provided.

If, at 1116, the user desires to make changes to either the wallpaper or wall parameters (EDIT), the user is allowed to make changes. As illustrated, the user is returned to 704 (the obtain images), however, as those skilled in the art can readily appreciate, the use may be returned to 706 (obtain surface parameters). In particular embodiments, the user may be provided with an interface to select whether to edit images or surface parameters.

If, at 1116, the user decides to end the process (ABORT) without submitting the design, the methodology 600 stops as indicated at 1120.

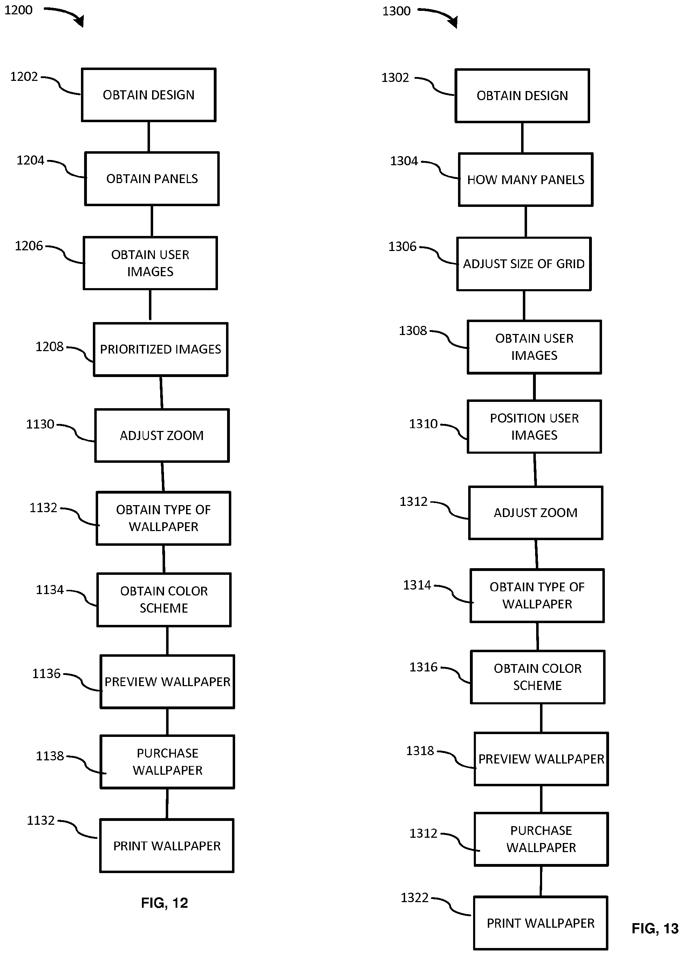

FIG. 12 illustrates an example of a computerized method 1200 of creating a personalized, custom contemporary collage wallpaper design. Methodology 1200 may be implemented by the wallpaper logic 604 described in FIG. 6 and/or the computer system 700 described in FIG. 7.

At 1202, the type of design (e.g., mosaic, mural, custom or custom contemporary collage, or grid) is obtained from a user. In the example used for methodology 1200, the Custom Contemporary Collage design was selected by the user. The custom contemporary collage is comprises at least two different size areas for displaying user provided images (e.g., photos, graphical art and/or text, etc.). Although the illustrated example in FIG. 15 shows two different sizes (large user image area and small user image area), those skilled in the art can readily appreciate that additional different sizes may also be employed.

At 1204, the panels for the selected theme are presented to the user. For example, in the custom contemporary collage illustrated in FIG. 4, panels for columns 402, 1404, 406, 408, and 410 were selected.

At 1206, the user images (e.g., photographs, graphical art and/or text, etc.) are obtained from the user. The user is prompted to select images to upload and the selected images are uploaded.

At 1208, the user prioritizes certain uploaded images for distribution among the large user image areas. The prioritized images are then randomly or pseudo-randomly distributed among large user image areas. The remaining (non-prioritized) images are then randomly or pseudo-randomly distributed among small user image areas In particular embodiments with more than two areas, the user selects images for areas starting with the largest area, next largest area, etc. Unselected images are distributed among the smallest user image area. In another example embodiment, the user may drag and drop images into the user image areas.

At 1210, the zoom of the images may be adjusted. In particular embodiments, the user can adjust the size of the image within the areas of any cell.

At 1212, the type of wallpaper is obtained. For example, the user may select between traditional and repositionable.

At 1214, the color scheme for the output is obtained. For example, the user may select between black & white, color, watercolor, and sepia. Those skilled in the art should readily appreciate that the listed color schemes is not exhaustive, and any suitable color scheme may be employed. For example, a certain tint or filter may be applied.

At 1216, the user previews the wallpaper design. If the wallpaper design is satisfactory the user can purchase the wallpaper as illustrated at 1218. Otherwise, the user may return to any of 1202 - 1216 to change the parameters for the wallpaper.

At 1212, the selected design is sent to a wallpaper printer for printing. The wallpaper will be printed using the selected theme with the images in the selected locations on the selected type of wallpaper.

Although not shown in method 1200, the user is also be given the opportunity to provide a description of the wall. For example, the dimensions, the location of any doors, windows, and utility outputs (e.g., electrical and/or cable

FIG. 13 illustrates an example of a computerized method 1300 of creating a personalized, custom grid wallpaper design. Methodology 2000 may be implemented by the wallpaper logic 604 described in FIG. 6 and/or the computer system 700 described in FIG. 7.

At 1302, the type of design (e.g., mural, mosaic, custom classic collage, custom contemporary collage, or grid,) is obtained from a user. In the example used for methodology 1300, the Graceful Grid design was selected by the user. The custom Graceful Grid comprises same size areas (or cells) for displaying user provided images (e.g., photos, graphical art and/or text, etc.).

At 1304, the software determines how many panels for the Graceful Grid design. For example, the wider the wall the more panels.

At 1306, the user adjusts the size of the grid. As the grid is adjusted the size of the cells within the grid are also adjusted accordingly.

At 1308, the user images (e.g., photographs, graphical art and/or text, etc.) are obtained from the user. The user is prompted to select images to upload and the selected images are uploaded.

At 1310, the user positions the images. In an example embodiment, the user can drag and drop images into the individual grid cells. In another example embodiment, the computer can randomly or pseudo-randomly assign user images to cells.

At 1312, the zoom of the images may be adjusted. In particular embodiments, the user can adjust the size of the image within the area for any cell.

At 1314, the type of wallpaper is obtained. For example, the user may select between traditional and repositionable.

At 1316, the colors scheme for the output is obtained. For example, the user may select between black & white, color, watercolor, and sepia. Those skilled in the art should readily appreciate that the listed color schemes is not exhaustive, and any suitable color scheme may be employed. For example, a certain tint or filter may be applied.

At 1318, the user previews the wallpaper design. If the wallpaper design is satisfactory the user can purchase the wallpaper as illustrated at 1320. Otherwise, the user may return to any of 1302 - 1318 to change the parameters and preview the updated wallpaper design.

At 1322, the selected design is sent to a wallpaper printer for printing. The wallpaper will be printed using the selected theme with the images in the selected locations on the selected type of wallpaper.

Although not shown in method 1300, the user is also be given the opportunity to provide a description of the wall. For example, the dimensions, the location of any doors, windows, and utility outputs (e.g., electrical and/or cable

Described above are example embodiments. It is, of course, not possible to describe every conceivable combination of components or methodologies, but one of ordinary skill in the art will recognize that many further combinations and permutations of the example embodiments are possible. Accordingly, this application is intended to embrace all such alterations, modifications and variations that fall within the spirit and scope of the appended claims interpreted in accordance with the breadth to which they are fairly, legally and equitably entitled.

## Claims

1. An apparatus, comprising:
a user interface that comprises a display and an input device to receive data;
wallpaper logic coupled with the user interface; and
a printer coupled with the wallpaper logic;
the wallpaper logic is operable to provide data representative of a plurality of wallpaper designs;
the wallpaper logic is operable to obtain data representative of a selected wallpaper design selected from the plurality of wallpaper designs via the user interface;
the wallpaper logic is operable to obtain data representative of a user provided image for the selected wallpaper design from the user interface;
the wallpaper logic is operable to obtain parameters for a surface the selected wallpaper design is to be mounted on;
the wallpaper logic is operable to provide a preview of the wallpaper;
the wallpaper logic is operable to generate a print job for the selected wallpaper design based on the data representative of the selected wallpaper design, the data representative of the user provided image for the selected wallpaper design, and the parameters for the surface; and
the wallpaper logic is operable to send the print job to a wallpaper printer for printing.

2. The apparatus set forth in claim 1, wherein the selected wallpaper design is selected from a group consisting of a mosaic, a mural, a custom classic collage, a custom contemporary collage, and a grid.

3. The apparatus set forth in claim 2, wherein the selected wallpaper design
- is the mosaic wallpaper design; and wherein the data representative of the user provided image comprises a main image and at least one other image, or
- is the mural wallpaper design; and wherein the data representative of the user provided image comprises an image for the mural.

4. The apparatus set forth in claim 2, wherein the selected wallpaper design is the custom classic collage design; and
the data representative of the user provided image comprises data representative of at least one primary image and data representative of at least one other image;
wherein the at least one primary image is output at a larger size than the at least one other image.

5. The apparatus set forth in claim 4, wherein the at least one primary image is output at eye level.

6. The apparatus set forth in claim 4 or 5, the wallpaper logic is further operable to:
send the data representative of a selected wallpaper design, the data representative of a user provided image that comprises the data representative of the at least one primary image and the data representative of at least one other image are provided to a designer to provide the preview of the wallpaper, the wallpaper logic is further operable
obtain an email address of a user;
obtain from the provider the preview of the wallpaper;
send an email to the email address of the user advising the user the preview of the wallpaper is ready; and
provide the preview of the wallpaper responsive to the user requesting the preview.

7. The apparatus set forth in claim 2, wherein the selected wallpaper design is the custom contemporary collage design, the custom contemporary collage comprises a first user image areas that is larger than a second image user area;
wherein the data representative of the user provided image comprises data representative of at least one prioritized image and the data representative of at least one other image;
wherein the first user image area comprises a plurality of first user image areas and the second user image area comprises a plurality of second user image areas; and
the wallpaper logic is further operable to selectively distribute the at least one prioritized image among the plurality of first user image areas and distribute the at least one other image among the plurality of second user image areas.

8. The apparatus set forth in claim 2, wherein the selected wallpaper design is the grid wallpaper design; and
wherein the data representative of the user provided image comprises data representative of at least one image.

9. The apparatus set forth in claim 8, wherein the data representative of a user provided image comprises a plurality of user provided images; and
- the wallpaper logic is operable to distribute the plurality of images into the grid, or
- the wallpaper logic is operable to obtain user selected distribution of the plurality of images into the grid.

10. The apparatus set forth in claim 9, wherein the user interface provides the ability to adjust a zoom of individual images within the grid.

11. The apparatus set forth in any one of claims 1 to 10, further comprising:
the wallpaper logic is operable to obtain a color scheme for the selected wallpaper design; and
the wallpaper logic is operable to generate the print job based on the color scheme, wherein preferably the color scheme is selected from a group consisting of color, black and white, sepia, and a color filter.

12. The apparatus set forth in any one of claims 1 to 10, wherein the image is one of a group consisting of data representative of a photograph, data representative of text, and data representative of graphical art.

13. The apparatus set forth in claim 1, the wallpaper logic is further operable to:
obtain via the user interface data representative of a wallpaper type, wherein preferably the wallpaper type is selected from a group consisting of traditional and repositionable.

14. A non-transitory computer readable instructions encoded thereon for execution by a processor, and when execute d operable to:
provide data representative of a plurality of wallpaper designs;
obtain data representative of a selected wallpaper design selected from the plurality of wallpaper designs;
obtain data representative of a user provided image for the selected wallpaper design;
obtain parameters for a surface the selected wallpaper design is to be mounted on;
provide a preview of the wallpaper;
generate a print job for the selected wallpaper design based on the data representative of the selected wallpaper design, the data representative of the user provided image for the selected wallpaper design, and the parameters for the surface; and
send the print job to a wallpaper printer for printing.
